# FASCICULE DE BREVET EUROPEEN

(11) **EP 2 800 935 B1**
(45) Date de publication et mention de la délivrance du brevet: **13.09.2017**
(21) Numéro de dépôt: 13716210.3
(22) Date de dépôt: 02.01.2013
(51) Int. Cl.: F24H 1/12, F02N 19/10

(54) **DISPOSITIF DE PRECHAUFFAGE DE FLUIDE NOTAMMENT DE FLUIDE DE REFROIDISSEMENT DE MOTEUR A COMBUSTION**
VORRICHTUNG ZUM VORWÄRMEN EINER FLÜSSIGKEIT, INSBESONDERE EINER BRENNKRAFTMASCHINEN-KÜHLFLÜSSIGKEIT
DEVICE FOR PREHEATING A FLUID, NOTABLY A COMBUSTION ENGINE COOLANT FLUID

(30) Priorité: 04.01.2012 BE 201200006
(43) Date de publication de la demande: 12.11.2014
(73) Titulaire: Volante, Nino, 9651 Eschweiler (Wiltz) (LU)
(72) Inventeur: ZUNE, Jean-François, B-6670 Gouvy (BE)
(74) Mandataire: Lecomte & Partners
(86) Numéro de dépôt international: PCT/EP2013/050015
(87) Numéro de publication internationale: WO 2013/102629

(56) Documents cités:
- EP-A1- 1 529 470
- DE-A1- 3 217 758
- DE-U1- 8 701 656
- DE-U1-202005 017 693
- GB-A- 2 014 417
- GB-A- 2 079 421

## Description

### Domaine technique

L'invention a trait à un dispositif de chauffage d'un fluide, plus particulièrement d'un fluide, notamment de refroidissement, d'un moteur à combustion. La présente invention a également trait à un procédé de chauffage de fluides destiné à de multiples applications.

Les fluides peuvent être de l'eau sanitaire, de l'eau chlorée, de l'eau / glycol, des hydrocarbures (gasoil, essence, huile,...), des huiles végétales (colza), des gaz liquides ou à l'état gazeux,...

Les exemples d'applications de chauffage sont multiples : industrielles, groupes électrogènes, groupes de cogénération, moteurs thermiques (à essence, gasoil, LPG,...) piscines, spas, eau sanitaire, aquariums, étangs,...

### Technique antérieure

Les moteurs des groupes électrogènes de secours (hôpitaux, entreprises,...) doivent être maintenus à une température (±40°C.) idéale pour la mise en route directe de ceux-ci, afin d'assurer dans les quelques secondes l'approvisionnement en électricité en cas de coupure du réseau.

Les moteurs des véhicules de secours (ambulances, pompiers,...) doivent également être chauffés préalablement pour assurer un démarrage immédiat dans les meilleures conditions afin d'assurer leurs interventions.

Les moteurs des véhicules des particuliers peuvent également être chauffés avant le départ, afin de non seulement démarrer dans de bonnes conditions, mais également d'améliorer le confort des passagers, par un habitacle directement chaud, les vitres désembuées, dégivrées. De nombreuses études démontrent un effet bénéfique sur la diminution de carburant et ainsi que sur la diminution de la pollution au démarrage en utilisant un dispositif de chauffage.

Des fabricants proposent sur le marché des dispositifs de chauffage à alimentation électrique externe qui fonctionnent selon le principe de thermosiphon. L'élément chauffant est directement plongé dans le corps de chauffe, ou dans les chambres d'eau du moteur et, donc directement en contact avec le fluide. Afin de réduire son encombrement, la charge spécifique par cm² est relativement très élevée, donc peu fiable dans le temps. Le rendement de ceux-ci est très faible et le placement sur le circuit n'est pas aisé pour permettre la thermo-circulation. Depuis plus d'une dizaine d'année, les motoristes ont modifié considérablement le design des chambres d'eau dans les moteurs et, il devient difficile de placer ce type de chauffage, car cette configuration ne permet plus de créer une circulation efficace par ce principe de thermosiphon et ainsi de chauffer correctement et uniformément les moteurs.

D'autres proposent des dispositifs avec une pompe de circulation. L'élément chauffant (thermoplongeur) est également directement immergé dans l'eau. Le rendement est nettement supérieur que par le procédé par thermosiphon. Cependant, l'encombrement reste trop élevé pour permettre un placement aisé sur les véhicules moyens (Véhicules des particuliers, ambulances, camions...). De plus, les pompes généralement utilisées doivent être positionnées horizontalement, ce qui réduit encore les possibilités d'intégration sous le capot du moteur. La seule possibilité serait de réduire l'encombrement de ces dispositifs en diminuant la longueur de l'élément chauffant. Cette solution affecterait la fiabilité, car on sortirait des normes habituellement données par les fabricants concernant la charge spécifique maximale des éléments chauffants pour ce type de fluide. Cela occasionnerait une ébullition du fluide au niveau de l'élément chauffant qui aurait pour résultat une dégradation du blindage de celui-ci, et ensuite se poursuivrait par la rupture prématurée de l'élément.

Le document de brevet WO 2011/016763 A1 divulgue un dispositif de préchauffage de fluide de refroidissement de moteur à combustion. Il comprend essentiellement un corps principal avec un volume intérieur, une entrée, une sortie, et un corps de chauffe disposé dans le volume intérieur du corps principal. Le corps de chauffe comprend lui-même un volume intérieur dans lequel sont disposées une ou plusieurs résistances électriques du type à coefficient de température négatif PTC (acronyme pour « Positive Temperature Coefficient »). Ce dispositif de préchauffage présente l'avantage d'être assez simple de construction. La liaison thermique entre les résistances et le fluide n'y est cependant pas optimale. De plus, le corps principal est sujet à des pertes à l'ambiance importantes. Le rendement thermique de ce dispositif n'est par conséquent pas optimal. Ce dispositif semble fonctionner sur le principe du thermosiphon, ce qui en limite les performances de réchauffage.

Le document de brevet DE 102 58 257 A1 divulgue également un dispositif de préchauffage de fluide d'un moteur à combustion, tel que par exemple le carburant, le lubrifiant ou encore le liquide de refroidissement. Il comprend essentiellement un corps principal allongé avec une bride de fixation. Le corps principal est destiné à être immergé dans le fluide et la bride assure un montage étanche sur une paroi. Le corps principal comprend différents éléments dont un cadre, une tôle conductrice et des éléments chauffants du type à coefficient de température négatif PTC (acronyme pour « Positive Temperature Coefficient »). Ce dispositif de préchauffage présente le même inconvénient que celui du document cité précédemment, à savoir que le contact thermique entre les éléments chauffants et le fluide n'est pas optimisé. Ce dispositif semble fonctionner sur le principe du thermosiphon, ce qui en limite les performances de réchauffage.

Le document de brevet WO 01/33071 A1 divulgue un procédé de préchauffage d'un moteur un dispositif pour la mise en oeuvre du procédé en question. Le procédé consiste essentiellement à prévoir un élément chauffant tel qu'une résistance électrique dans un réservoir séparé du moteur et contenant du fluide de refroidissement du moteur. La résistance électrique du type spiralée est en contact direct avec le fluide. Ce contact direct n'est pas souhaitable pour certaines applications. De plus, l'encombrement général du dispositif est assez important et peut poser des problèmes d'intégration. Ce dispositif semble fonctionner sur le principe du thermosiphon, ce qui en limite les performances de réchauffage.

Le document de brevet US 4,371,777 a trait à un corps de chauffe pour fluide, formant un circuit en forme de U et comprenant des éléments de chauffe du type PTC. Ces derniers sont disposés dans le creux du U, le U étant formé par un tuyau cintré pourvu de deux éléments massifs épousant le tuyau et entre lesquels les éléments PTC sont disposés. Alternativement, le corps de chauffe peut comprendre deux éléments massifs disposés l'un contre l'autres via un joint au niveau du passage de fluide pour assurer une étanchéité. Une coiffe en deux parties est prévue. La puissance d'échange thermique reste limitée dans cet enseignement, notamment en raison du diamètre limité du tuyau cintré et du nombre limité d'éléments chauffants.

Le document de brevet DE 200 20 347 U montre un corps de chauffe avec un passage rectiligne pour un fluide et un logement pour un élément de chauffe céramique. La puissance d'échange thermique y est très limitée.

Le document de brevet US 7,865,073 B2 montre un corps de chauffe notamment pour machines à café, avec un passage pour le fluide formé par un tuyau cintré en U, un corps non massif dans lequel les deux jambes du U sont insérées et dans lequel un ou plusieurs éléments de chauffe du type PTC sont insérés. La puissance d'échange thermique reste limitée dans cet enseignement, notamment en raison du diamètre limité du tuyau cintré et du nombre limité d'éléments chauffants.

Le document de brevet EP 1 529 470 divulgue un dispositif de chauffage d'un fluide, conforme au préambule de la revendication 1.

### Résumé de l'invention

### Problème technique

L'invention a pour objectif de proposer un dispositif de chauffage de fluide palliant au moins un des inconvénients sus mentionnés. Plus particulièrement, l'invention a pour objectif de proposer un dispositif de chauffage de fluide présentant un rendement thermique amélioré et de construction simple et économique. Plus particulièrement encore, l'invention a pour objectif de proposer un dispositif de chauffage de fluide compact et de construction simple et économique.

### Solution technique

L'invention a pour objet un dispositif de chauffage d'un fluide, conforme à la revendication 1.

Préférentiellement, l'élément massif comprend également la section du passage pour le fluide qui correspond à la jonction des jambes du U. Selon un mode avantageux de l'invention, l'élément massif comprend une rainure de chaque côté du creux du U.

Selon un autre mode avantageux de l'invention, la ou au moins une des résistances électriques est généralement allongée et plate, et est essentiellement noyée dans la ou une des rainures de l'élément massif du corps de chauffe.

Selon un encore autre mode avantageux de l'invention, la ou les rainures est/sont de section rectangulaire avec le grand côté essentiellement parallèle au plan du U et le petit côté transversal au plan du U.

Selon un encore autre mode avantageux de l'invention, la largeur de la ou d'au moins une des rainures et la largeur de la ou d'au moins une des résistances logée dans ladite rainure sont comprises entre 50% et 150%, préférentiellement entre 80% et 120%, plus préférentiellement entre 90% et 110%, de la largeur du creux.

Selon un encore autre mode avantageux de l'invention, la largeur du creux est supérieure à 2 fois, préférentiellement 3 fois, le diamètre moyen du passage pour le fluide.

Selon un encore autre mode avantageux de l'invention, le corps de chauffe comprend au moins une plaque de fermeture de la ou d'une des rainures, destinée à être fixée au corps massif, la ou les plaques étant préférentiellement fixée(s) au corps massif par vissage.

Selon un encore autre mode avantageux de l'invention, le passage en forme de U est réalisé par perçage de l'élément massif du corps de chauffe, l'élément massif étant préférentiellement pourvu d'au moins un bouchon fermant au moins un des perçages.

Selon un encore autre mode avantageux de l'invention, le ou au moins un des bouchons est un doigt de gant disposé dans le passage pour le fluide.

Selon un encore autre mode avantageux de l'invention, l'entrée du fluide dans le corps de chauffe est au niveau de l'extrémité libre d'une des jambes du U et/ou la sortie du fluide du corps de chauffe est au niveau de l'extrémité libre de l'autre/d'une des jambes du U.

Selon un encore autre mode avantageux de l'invention, l'élément massif du corps de chauffe est généralement allongé suivant une direction principale, ledit élément étant préférentiellement de forme parallélépipédique.

Selon un encore autre mode avantageux de l'invention, le contour de la section transversale de l'élément massif dépasse un rectangle incluant les deux portions du passage pour le fluide qui correspondent aux jambes du U.

Selon un encore autre mode avantageux de l'invention, l'élément massif est en matière pleine.

Selon un encore autre mode avantageux de l'invention, le rapport entre la longueur et la largeur et/ou l'épaisseur de l'élément massif du corps de chauffe est supérieur à 2, préférentiellement supérieur à 3, plus préférentiellement supérieur à 4.

Selon un encore autre mode avantageux de l'invention, la ou au moins une des résistances électriques est du type à coefficient de température positif.

Selon un encore autre mode avantageux de l'invention, le dispositif comprend une pompe de circulation connectée hydrauliquement au corps de chauffe, préférentiellement à la sortie du fluide dans le corps de chauffe.

Selon un encore autre mode avantageux de l'invention, le corps de chauffe est recouvert d'une coiffe avec une isolation thermique.

Selon un encore autre mode avantageux de l'invention, la ou les résistances électriques ne sont pas en contact direct avec le fluide.

Selon un encore autre mode avantageux de l'invention, l'élément massif du corps de chauffe est en matériau conducteur de la chaleur, préférentiellement sélectionné parmi les matériaux suivants : aluminium, laiton, inox, matériau plastique. Par matériau conducteur de la chaleur on entend une conductivité thermique supérieure ou égale à 10 W m⁻¹ K⁻¹, préférentiellement 20 W m⁻¹ K⁻¹, plus préférentiellement 50 W m⁻¹ K⁻¹, plus préférentiellement encore 100 W m⁻¹ K⁻¹.

Selon un encore autre mode avantageux de l'invention, l'élément massif du corps de chauffe est d'un seul tenant, préférentiellement venu de la même matière.

L'invention a également pour objet un moteur à combustion équipé d'un dispositif de chauffage du fluide de refroidissement, remarquable en ce que le dispositif est conforme à l'invention.

L'invention a également pour objet un procédé de préchauffage du fluide de refroidissement d'un moteur à combustion à l'aide d'un dispositif de chauffage, remarquable en ce que le dispositif est conforme à l'invention.

### Avantages apportés

Les mesures de l'invention présentent l'avantage d'optimiser le rendement thermique, plus précisément en augmentant le rendement de l'échange thermique entre la ou les résistances chauffantes et le fluide, et également en diminuant les pertes à l'ambiance. En effet, la construction du corps de chauffe selon l'invention permet un contact intime avec les résistances et avec le fluide, et ce de manière très compacte. Le passage pour le fluide peut être dimensionné avec une plus grande section ce qui conduit à moins de pertes de charge et un rendement accru. Les rainures ouvertes du corps de chauffe confèrent une grande modularité en qui concerne le nombre et/ou la taille des résistances électriques. Cette modularité est particulièrement intéressante pour adapter le dispositif de chauffage à différentes applications. En effet, une ou plusieurs résistances peuvent être alimentées en 110 ou 230 VAC (typiquement sur le réseau domestique) lors du préchauffage du moteur d'un véhicule à l'arrêt. Une ou plusieurs résistances supplémentaires peuvent être alimentées en tension de 12 ou 24 VDC par la batterie du véhicule en vue de poursuivre le chauffage lorsque le moteur est en marche. La forme compacte et géométrique du corps de chauffe permet de l'isoler facilement en l'équipant d'un manteau isolant. Ce dernier peut être prévu amovible, ce qui est rendu facile à nouveau par la forme optimisée du corps de chauffe.

### Brève description des dessins

La figure 1 est une vue en plan du dispositif de chauffage d'un fluide, conforme à l'invention.
La figure 2 est une vue de côté du dispositif de chauffage de la figure 1.
La figure 3 est une vue en élévation du dispositif de chauffage de la figure 1.
La figure 4 est une vue de côté droit du dispositif de chauffage des figures 1 à 3, où le corps de chauffe est sans son manteau isolant.
La figure 5 correspond à la figure 1 où le corps de chauffe est sans son manteau isolant.
La figure 6 est une vue en coupe E-E du corps de chauffe du dispositif tel qu'illustré à la figure 4.
La figure 7 est une vue en coupe F-F du corps de chauffe du dispositif tel qu'illustré à la figure 5.

### Description des modes de réalisation

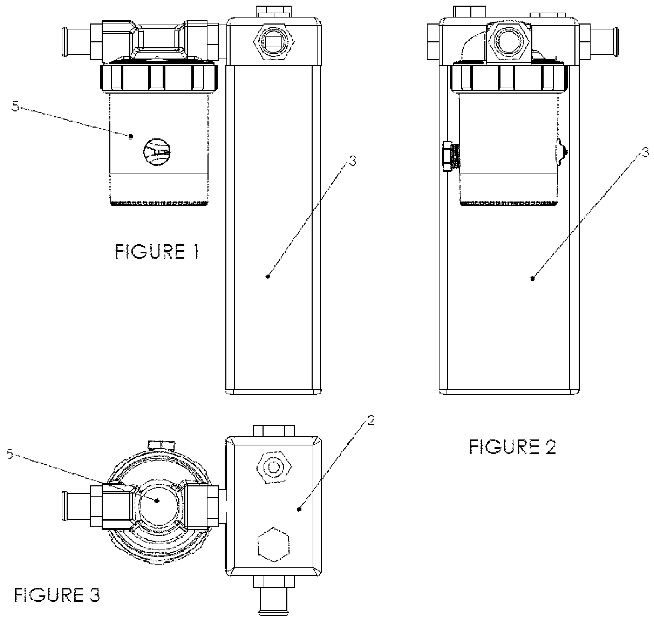

Le dispositif de chauffage ou préchauffage de fluide illustré aux figures 1 à 3 comprend essentiellement un corps de chauffe enveloppé d'un manteau isolant 3 et une pompe de circulation 5. Le corps de chauffe est de forme généralement allongée et de section généralement rectangulaire. Il comprend une entrée de fluide à son extrémité supérieure, et une sortie disposée à hauteur de l'entrée et orientée à environ 90°, connectée directement à la pompe de circulation 5.

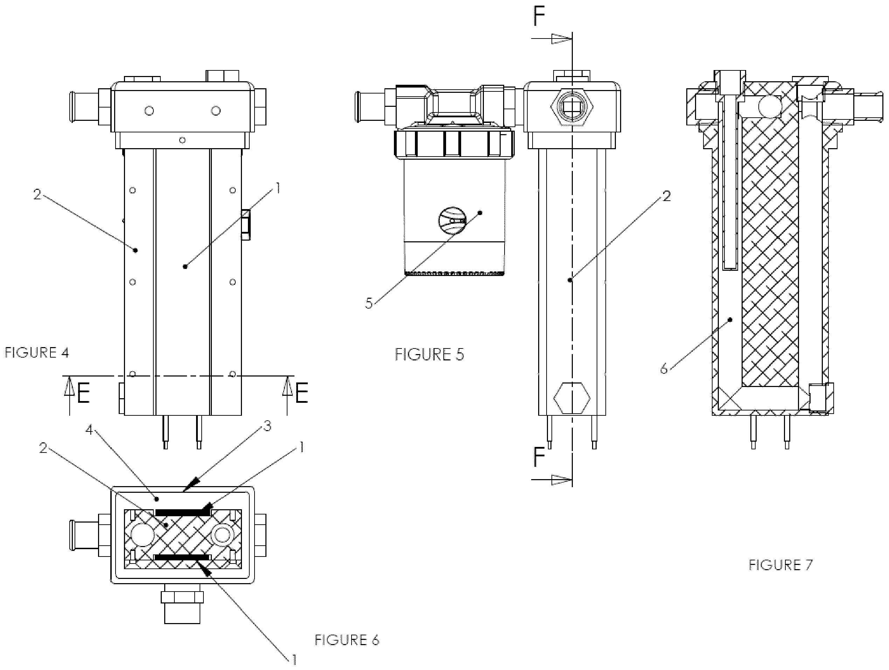

Les figures 4 à 7 illustrent le corps de chauffe du dispositif, exempt de son manteau isolant 3. On peut observer qu'il comprend un élément massif 2 de section généralement rectangulaire et s'étendant en longueur. Il s'agit de manière préférentielle d'un bloc en matériau métallique conducteur de la chaleur tel qu'un bloc en aluminium. Comme cela est bien visible aux figures 6 et 7, il est percé sur une grande partie de sa longueur depuis sa face supérieure jusqu'à proximité de sa face inférieure, et ce deux fois selon deux directions parallèles. Ces deux perçages verticaux sont ainsi disposés à proximité des extrémités de la section rectangulaire de l'élément massif. Chacun de ces deux perçages est bouché par un bouchon respectif, comme cela est bien visible à la figure 7. Un des bouchons est par ailleurs un doigt de gant s'étendant dans le perçage ainsi réalisé. Un perçage horizontal est réalisé au bas de l'élément, de manière à former un passage entre les deux perçages verticaux. Comme cela est également visible à la figure 7, un bouchon est prévu de manière à fermer le perçage au niveau de la surface extérieure de l'élément, de manière à refermer le trou opéré entre la surface extérieure et l'extrémité inférieure du perçage vertical correspondant. Toujours à la figure 7, on peut observer qu'un autre perçage horizontal a été réalisé, et ce en haut de l'élément et sur approximativement une moitié de la largeur de l'élément de manière à former un passage entre l'entrée de fluide (située à une position haute et centrale de l'élément) et le perçage vertical de gauche. Un bouchon est également prévu de manière à fermer l'ouverture ainsi pratiquée entre le perçage vertical en question et la surface extérieure correspondante de l'élément. La sortie est assurée par un perçage horizontal du côté opposé, le perçage se limitant à la matière située entre le perçage vertical de droite et la surface extérieure correspondante de l'élément.

Les perçages décrits ci-avant forment ainsi un passage pour le fluide au sein de la matière de l'élément, ce passage ayant au moins essentiellement une forme de U. En référence à la figure 6, l'élément massif 2 comprend un lamage sur chacune de ses deux faces principales. Il s'étend sur une majeure partie de la longueur de l'élément massif de manière à former un logement de section rectangulaire pour des éléments chauffants 1 du type résistante à coefficient de température positif PTC. Ces éléments 1 présentent une forme généralement allongée et de section généralement rectangulaire et constante. Chacun des logements est refermé par une plaque vissée sur l'élément. Chacun des éléments chauffants est ainsi en contact intime, et ce sur au moins ses deux faces principales, avec le matériau de l'élément massif 2. Les connecteurs électriques des éléments chauffants 1 sont en saillie depuis la face inférieure du corps de chauffe.

Les éléments chauffants utilisés sont du type PTC (positive température coefficient). Une augmentation minime de la température entraîne une hausse importante de la résistance, limitant ainsi le courant et donc la puissance électrique produite. Il se crée un équilibre entre le flux thermique généré par le P.T.C. et la dissipation thermique vers l'environnement. Si l'on rend plus efficace la dissipation de chaleur, il en résulte un refroidissement du composant céramique P.T.C., ce refroidissement entraîne à son tour une baisse de la résistance du composant. Ainsi, la puissance électrique augmente jusqu'à atteindre un nouvel état d'équilibre. La puissance absorbée est donc fonction de la température ambiante, de la température du fluide et du débit de la pompe faisant circuler ce fluide caloporteur. Exemple : un élément chauffant P.T.C. d'une puissance nominale de 1500 watts à une température ambiante de 20°C., permettant de chauffer le fluide au départ de 0°C., la puissance nécessaire sera de: 1700 Watts. Pour ce même élément et dans les mêmes conditions la puissance absorbée se situera à 1300 Watts pour chauffer ce fluide à 60°C. Sur une surface très faible on peut se permettre d'augmenter fortement la charge par cm² sans risque de surchauffe, étant donné que cet élément est autorégulant, et n'est pas en contact direct avec le fluide à chauffer.

L'élément chauffant P.T.C. peut fonctionner à sec sans risque de claquage, sans thermostat de régulation et de sécurité, il va automatiquement se stabiliser à sa température de consigne. En outre celui-ci peut fonctionner en étant alimenté en différentes tensions et fréquences (110 - 240 Volts 50/60 Hz)

Un élément chauffant blindé standard, comme décrit ci-dessus, sans thermostat de régulation chauffera jusqu'à sa rupture (claquage). Outre tous ces avantages que procurent les éléments PTC, ils permettent de supporter des tests d'isolation électrique à froid comme à chaud. Un élément chauffant blindé standard est normalement testé à froid. A chaud ces tests peuvent engendrer des risques destructifs, et ces tests à chaud ne sont guère recommandés par les constructeurs.

Par exemple, un thermoplongeur standard spiralé d'une puissance de 1500 Watts présente un volume d'encombrement d'environ 165 cm³. La solution adoptée avec les éléments P.T.C. présente environ 36 cm³ de volume, soit près de 80% de diminution du volume pour une même puissance.

Le corps de chauffe a été spécialement étudié afin de pouvoir utiliser cette technologie et de permettre un échange de chaleur optimal entre les éléments chauffants et le fluide à réchauffer.

La configuration de ce même corps peut recevoir différents éléments chauffants de puissances différentes selon les applications. Le profil du corps de chauffe peut être allongé pour recevoir des éléments de puissance supérieure. Ce corps peut être réalisé, soit en aluminium, en laiton, en inox ou en matières plastiques,... en fonction des applications. Une enveloppe de protection isolante externe augmente encore l'efficacité en réduisant les pertes de chaleur. Une isolation entre le corps de chauffe et cette enveloppe extérieure réduit encore les pertes calorifiques.

Les éléments PTC par leurs conceptions ont un seuil de température maximal qui est fixé en usine lors de leur fabrication. Les éléments chauffants sont auto régulant, très économiques au niveau énergétique. La puissance dissipée varie en fonction de la demande pour un seuil de température préalablement fixé. Ils ne nécessitent normalement pas de thermostat de régulation ou de sécurité.

Selon les applications, un thermostat mécanique ou électronique permet à l'utilisateur de sélectionner le seuil de température souhaité. Ce dispositif de régulation peut être alimenté en différentes tensions selon les applications.

En ce qui concerne les moteurs thermiques et, spécialement pour les véhicules, les groupes électrogènes,... un ou plusieurs éléments chauffants PTC placés dans le corps de chauffe et, alimentés par la batterie en 12 ou 24 VDC permettent en fonction de l'application, de poursuivre le chauffage lorsque le dispositif n'est plus alimenté en 110-230 Volts. L'objectif étant de permettre au moteur thermique préalablement réchauffé par le dispositif alimenté en 110 - 230 V, de poursuivre le réchauffage afin que ce moteur arrive plus rapidement à la température idéale de fonctionnement. Ce qui a un impact considérable sur la diminution de carburant et sur la diminution de pollution. Egalement, cette solution favorise le confort des usagers en obtenant un réchauffage de l'habitacle du véhicule plus rapidement.

En fonction des diverses applications et des fluides ou gaz à réchauffer, la pompe de circulation est adaptée.

## Revendications

1. Dispositif de chauffage d' un fluide, comprenant :
- un corps de chauffe avec un passage (6) en forme de U pour le fluide ; et
- au moins une résistance électrique (1) disposée à proximité du corps de chauffe ;
le corps de chauffe comprenant un élément en matériau massif (2) avec, à l'intérieur, les sections du passage (6) pour le fluide qui correspondent aux jambes du U, et au moins une rainure ouverte s'étendant le long du creux de la forme en U du passage pour le fluide, la ou les rainures recevant la ou au moins une des résistances électriques (1) ;
**caractérisé en ce que**
la ou au moins une des rainures s' étend en face du creux de la forme en U du passage pour le fluide et a une section rectangulaire avec le grand côté essentiellement parallèle au plan du U et le petit côté transversal audit plan, et
le corps de chauffe comprend au moins une plaque, **caractérisé en ce que** la plaque est une plaque de fermeture de la ou d' une des rainures, destinée à être fixée au corps massif, la plaque étant préférentiellement fixée au corps massif par vissage.

2. Dispositif de chauffage selon la revendication 1, **caractérisé en ce que** l'élément massif (2) comprend une rainure de chaque côté du creux du U.

3. Dispositif de chauffage selon l'une des revendications 1 et 2, **caractérisé en ce que** la ou au moins une des résistances électriques (1) est généralement allongée et plate, et est essentiellement noyée dans la ou une des rainures de l'élément massif (2) du corps de chauffe, et préférentiellement la largeur de la ou d'au moins une des rainures et la largeur de la ou d'au moins une des résistances (1) logée dans ladite rainure sont comprises entre 50% et 150%, préférentiellement entre 80% et 120%, plus préférentiellement entre 90% et 110%, de la largeur du creux.

4. Dispositif de chauffage selon l'une des revendications 1 à 3, **caractérisé en ce que** le passage (6) en forme de U est réalisé par perçage de l'élément massif (2) du corps de chauffe, l'élément massif étant préférentiellement pourvu d'au moins un bouchon fermant au moins un des perçages, et préférentiellement le ou au moins un des bouchons est un doigt de gant disposé dans le passage pour le fluide.

5. Dispositif de chauffage selon l'une des revendications 1 à 4, **caractérisé en ce que** l'entrée du fluide dans le corps de chauffe est au niveau de l'extrémité libre d' une des jambes du U et/ou la sortie du fluide du corps de chauffe est au niveau de l'extrémité libre de l'autre/d'une des jambes du U.

6. Dispositif de chauffage selon l'une des revendications 1 à 5, **caractérisé en ce que** l'élément massif (2) du corps de chauffe est généralement allongé suivant une direction principale, ledit élément étant préférentiellement de forme parallélépipédique, et préférentiellement le rapport entre la longueur et la largeur et/ou l'épaisseur de l'élément massif du corps de chauffe est supérieur à 2, préférentiellement supérieur à 3, plus préférentiellement supérieur à 4.

7. Dispositif de chauffage selon l'une des revendications 1 à 6, **caractérisé en ce que** la ou au moins une des résistances électriques (1) est du type à coefficient de température positif.

8. Dispositif de chauffage selon l'une des revendications 1 à 7, **caractérisé en ce qu'** il comprend une pompe de circulation (5) connectée hydrauliquement au corps de chauffe, préférentiellement à la sortie du fluide dans le corps de chauffe.

9. Dispositif de chauffage selon l'une des revendications 1 à 8, **caractérisé en ce que** le corps de chauffe est recouvert d' une coiffe avec une isolation thermique (3).

10. Dispositif de chauffage selon l'une des revendications 1 à 9, **caractérisé en ce que** la ou les résistances électriques (1) ne sont pas en contact direct avec le fluide.

11. Dispositif de chauffage selon l'une des revendications 1 à 10, **caractérisé en ce que** l'élément massif (2) du corps de chauffe est en matériau conducteur de la chaleur, préférentiellement sélectionné parmi les matériaux suivant : aluminium, laiton, inox, matériau plastique.

12. Dispositif de chauffage selon l'une des revendications 1 à 11, **caractérisé en ce que** l'élément massif (2) du corps de chauffe est d' un seul tenant, préférentiellement venu de la même matière.

13. Moteur à combustion équipé d' un dispositif de chauffage du fluide de refroidissement, **caractérisé en ce que** le dispositif est conforme à l'une des revendications 1 à 11.

## Patentansprüche

1. Vorrichtung für das Erhitzen einer Flüssigkeit, mit
- einem Heizkörper mit einem Durchgang (6) in Form eines U für die Flüssigkeit; und
- mindestens einem elektrischen Widerstand (1), der in der Nähe des Heizkörpers angeordnet ist;
wobei der Heizkörper ein Element aus einem massiven Material (2) beinhaltet, mit im Inneren den Abschnitten für den Durchgang (6) für die Flüssigkeit, die den Beinen des U entsprechen und mindestens einer offenen Nut, die sich entlang der Aushöhlung der U-Form des Durchgangs für die Flüssigkeit erstreckt, wobei die Nut oder die Nuten den oder mindestens einen der elektrischen Widerstände (1) aufnehmen;
wobei sich die Nut oder mindestens eine der Nuten gegenüber der Aushöhlung der U-Form des Durchgangs für die Flüssigkeit erstreckt und einen rechteckigen Querschnitt aufweist, wobei sich die lange Seite im Wesentlichen parallel zur Ebene des U und die kurze Seite quer zu der genannten Ebene erstreckt, und
der Heizkörper mindestens eine Platte beinhaltet, **dadurch gekennzeichnet, dass** die Platte eine Verschlussplatte der Nut oder einer der Nuten ist, die dazu bestimmt ist, um mittels Verschraubung auf dem massiven Körper befestigt zu werden.

2. Heizvorrichtung nach Anspruch 1, **dadurch gekennzeichnet, dass** das massive Element (2) eine Nut auf jeder Seite der Aushöhlung des U beinhaltet.

3. Heizvorrichtung nach einem der Ansprüche 1 und 2, **dadurch gekennzeichnet, dass** der oder mindestens einer der elektrischen Widerstände (1) im Allgemeinen langgezogen und flach ist und im Wesentlichen in der Nut oder einer der Nuten des massiven Elements (2) des Heizkörpers eingetaucht ist und vorzugsweise die Breite der Nut oder mindestens einer der Nuten und die Breite des Widerstands oder mindestens einer der Widerstände (1), die in der genannten Nut untergebracht sind, zwischen 50% und 150%, vorzugsweise zwischen 80% und 120%, noch bevorzugter zwischen 90% und 110% der Breite der Aushöhlung beträgt.

4. Heizvorrichtung nach einem der Ansprüche 1 bis 3, **dadurch gekennzeichnet, dass** der Durchgang (6) in Form eines U mittels Durchbohren des massiven Elements (2) des Heizkörpers ausgeführt wird, wobei das massive Element vorzugsweise mit mindestens einem Stopfen versehen ist, der mindestens eine der Bohrungen verschließt und vorzugsweise der oder mindestens einer der Stopfen ein Schutzrohr ist, das im Durchgang für die Flüssigkeit angeordnet ist.

5. Heizvorrichtung nach einem der Ansprüche 1 bis 4, **dadurch gekennzeichnet, dass** sich der Eingang der Flüssigkeit in den Heizkörper im Bereich des freien Endes eines der Beine des U und/oder der Ausgang der Flüssigkeit aus dem Heizkörper im Bereich des freien Endes des anderen / eines der Beine des U befindet.

6. Heizvorrichtung nach einem der Ansprüche 1 bis 5, **dadurch gekennzeichnet, dass** das massive Element (2) des Heizkörpers im Allgemeinen in einer Hauptrichtung langgestreckt ist, wobei das Element vorzugsweise die Form eines Parallelepipedons besitzt und das Verhältnis zwischen der Länge und der Breite und/oder der Dicke des massiven Elements des Heizkörpers mehr als 2, vorzugsweise mehr als 3, noch bevorzugter mehr als 4 beträgt.

7. Heizvorrichtung nach einem der Ansprüche 1 bis 6, **dadurch gekennzeichnet, dass** der oder mindestens einer der elektrischen Widerstände (1) vom Typ mit positivem Temperaturkoeffizienten ist.

8. Heizvorrichtung nach einem der Ansprüche 1 bis 7, **dadurch gekennzeichnet, dass** sie eine Umwälzpumpe (5) beinhaltet, die hydraulisch an den Heizkörper angeschlossen ist, vorzugsweise am Ausgang der Flüssigkeit im Heizkörper.

9. Heizvorrichtung nach einem der Ansprüche 1 bis 8, **dadurch gekennzeichnet, dass** der Heizkörper mit einer Abdeckung mit Wärmeisolierung (3) überzogen ist.

10. Heizvorrichtung nach einem der Ansprüche 1 bis 9, **dadurch gekennzeichnet, dass** der oder die elektrischen Widerstände (1) nicht in direktem Kontakt mit der Flüssigkeit stehen.

11. Heizvorrichtung nach einem der Ansprüche 1 bis 10, **dadurch gekennzeichnet, dass** das massive Element (2) des Heizkörpers aus einem wärmeleitenden Material besteht, das vorzugsweise aus einem der folgenden Materialien ausgewählt wird: Aluminium, Messing, Edelstahl, Kunststoff.

12. Heizvorrichtung nach einem der Ansprüche 1 bis 11, **dadurch gekennzeichnet, dass** das massive Element (2) des Heizkörpers aus einem einzigen Stück und vorzugsweise aus dem gleichen Materials besteht.

13. Verbrennungsmotor, der mit einer Heizvorrichtung für das Erhitzen der Kühlflüssigkeit ausgerüstet ist, **dadurch gekennzeichnet, dass** die Vorrichtung einem der Ansprüche 1 bis 11 entspricht.

## Claims

1. Heating device for a fluid, comprising:
- a heating body with a fluid passage (6) in the shape a U; and
- at least one electric resistor (1) disposed close to the heating body;
the heating body comprising a solid element (2) with, inside said body, the sections of the passage (6) for the fluid which correspond to the legs of the U, and at least one open groove extending along the hollow of the U-shape of the passage for the fluid, the at least one groove receiving the at least one resistor (1);
wherein the at least one groove extends in front of the hollow of the U-shape of the passage for the fluid and has a rectangular cross-section with the large side essentially parallel to the plane of the U and the short side transversal to said plane; and
the heating body comprises at least one plate, **characterized in that** the plate is a closure plate of the groove or of one of the grooves, intended to be fixed to the solid element, the plate being preferably fixed to the solid body by screwing.

2. Heating device according to claim 1, **characterized in that** the solid element (2) of the heating body comprises a groove on each side of the hollow of the U.

3. Heating device according to one of claims 1 and 2, **characterized in that** the at least one electrical resistor (1) is generally elongated and flat, and is substantially embedded in the groove of one of the grooves of the solid element (2) of the heating body, and preferably the width of the at least one groove and the width of the at least one resistor (1) housed in said at least one groove are between 50 % and 150%, preferably between 80% and 120%, more preferably between 90% and 110% of the width of the hollow.

4. Heating device according to one of claims 1 to 3, **characterized in that** the U-shaped passage (6) is formed by drilling the solid element (2) of the heating body, the solid element being preferably provided with at least one plug closing at least one of the drill holes, and preferably the at least one plug is a thimble disposed in the fluid passage.

5. Heating device according to one of claims 1 to 4, **characterized in that** the fluid inlet in the heating body is at the free end of one of the legs of the U and/or the fluid outlet of the heating body is at the free end of the other/one of the legs of the U.

6. Heating device according to one of claims 1 to 5, **characterized in that** the solid element (2) of the heating body is generally elongate along a principal direction, said element being preferably of parallelepiped shape, and preferably the ratio between the length and the width and/or thickness of the solid element of the heating body is greater than 2, preferably greater than 3, more preferably greater to 4.

7. Heating device according to one of claims 1 to 6, **characterized in that** the at least one electrical resistor (1) is of the positive temperature coefficient type.

8. Heating device according to one of claims 1 to 7, **characterized in that** it comprises a circulation pump (5) hydraulically connected to the heating body, preferably at the fluid outlet in the heating body.

9. Heating device according to one of claims 1 to 8, **characterized in that** the heating body is covered by a cap with a thermal insulation (3).

10. Heating device according to one of claims 1 to 9, **characterized in that** the at least one electric resistors (1) is/are not in direct contact with the fluid.

11. Heating device according to one of claims 1 to 10, **characterized in that** the solid element (2) of the heating body is in heat conductive material, preferably selected from the following materials: aluminum, brass, stainless steel, plastic material.

12. Heating device according to one of claims 1 to 11, **characterized in that** the solid element (2) of the heating body is of one piece, preferably made of the same material.

13. Combustion engine equipped with a device for heating the coolant, **characterized in that** the device conforms to one of claims 1 to 11.
